# EUROPEAN PATENT SPECIFICATION

(11) **EP 0 714 713 B1**
(45) Date of publication and mention of the grant of the patent: **10.05.2000**
(21) Application number: 95308157.7
(22) Date of filing: 14.11.1995
(51) Int. Cl.: B21C 37/12, B23D 25/04

(54) **Apparatus for cutting spiral pipe**
Gerät zum Schneiden von Spiralrohr
Appareil pour la découpe de tube spirale

(30) Priority: 30.11.1994 US 347499
(43) Date of publication of application: 05.06.1996
(73) Proprietor: LINDAB AKTIEBOLAG, 269 82 Bastad (SE)
(72) Inventor: Castricum, Wilhelmus P.H., Palatine, Illinois 60067 (US)
(74) Representative: Rostovanyi, Peter

(56) References cited:
- EP-A- 0 353 622
- EP-A- 0 384 625
- EP-A- 0 499 915
- US-A- 3 540 333

## Description

The present invention relates generally to an apparatus for cutting spirally formed pipe of the type known from US-A-4 924 684, on which the preamble to the appended independent claims is based. More particularly, the invention concerns an apparatus which rapidly cuts a continuously formed spiral pipe into relatively short segments.

As to prior art, mention should also be made of US-A-3 540 333 which discloses an orbital cutter for cutting thin-walled tubing. This cutter has a plurality of cutter wheels which are radially movable into engagement with the tubing.

Several machines use inner and outer knives to cut a pipe or tube. These knives are typically rotatable and have a convex or circular cutting edge for engaging the pipe. During the cutting operation, the pipe is rotated relative to the knives to perform the cut.

Some pipe cutting machines use these types of cutters to sever a continuously formed spiral pipe having a helical seam. Cutting machines of this type are disclosed in my U.S. Patent Nos. 4,706,481, 4,823,579 and the above-captioned 4,924,684, issued November 17, 1987, April 25, 1939, and May 15, 1990, respectively. In those machines, an inner knife is attached to a boom, and an outer knife is positioned outside the pipe. To cut the pipe, the outer knife is moved into an overlapping relationship with the inner knife. As the pipe rotates and moves axially, the overlapping knives move axially with the pipe and cooperate to cut the pipe. Since the pipe must complete one revolution to be severed, the axial distance the pipe moves during the cutting operation limits the length of pipe which can be cut. By the time the knives return to a begin-cut position, the pipe has already moved too far to cut a relatively short section of pipe.

U.S. Patent Nos. 957,966 (Jenkins) and 3,831,470 (Maroschak) disclose devices which cut a tube before it has completed one revolution. In these devices, the pipe is engaged by moving a plurality of outer knives radially inward into contact with the pipe. However, none of the knives revolve about the axis of the pipe. In practice, it would be difficult for these devices to cleanly cut a metal pipe since the outer knives independently cut the tube at different locations.

The pipe cutting machines disclosed in U.S. Patent Nos. 5,193,374 (Castricum), 3,913,430 (van Dijk) and 3,839,933 (Paramonoff) each include inner knives which are actively revolved about the axis of the pipe to perform a cut. None of these references discloses outer knives which are actively revolved about the axis of the pipe. In addition, the machines disclosed in the '430 and '933 patents are not used for cutting continuously formed spiral pipe.

A few attempts have been made to actively revolve an outer knife around the pipe to perform a cut. Such machines are disclosed in E.P. Patent Application 353 622 A1 (Harrop) and U.S. Patent Nos. 3,268,137 (Martin) and 1,635,807 (Amberg). In Amberg, a mechanism imparts an orbital movement to an annular shearing die in order to shear the tube. In Martin, an outer cutter is positioned inside a cutter housing, and the cutter housing is positioned inside a cam collar. The cam collar is moved axially to force the cutter housing and outer cutter radially inward until the cutter engages a pipe manually placed therein. The entire assembly is then rotated to cut the pipe. The machines disclosed in Amberg and Martin are not used for cutting continuously formed spiral pipe, and no inner knife is provided in Martin.

In Harrop, a rotary unit is positioned inside a cam ring, and a pair of outer knives are slidably mounted in the rotary unit. When a desired length of pipe has been reached, the feed of strip and formation of pipe is halted. The rotary unit is moved axially and the outer knives are forced radially inward to engage the pipe. The rotary unit is then rotated and the outer knives cooperate with a mandrel to cut the pipe.

The orbital cutter known from US-A-3 540 333, which was mentioned by way of introduction, cuts a continuously formed spiral pipe by using a fluid operated cylinder assembly, which is connected to a carrier wheel by a cable, to move three outer knifes radially inward into contact with the pipe, and actively revolving the outer knifes around the exterior periphery of the pipe.

The present invention aims at providing a pipe cutting apparatus which is improved over the prior-art cutters discussed above. This aim is achieved by apparatus having the features of the appended independent claims, preferred embodiments being defined in the subclaims. The cutting apparatus of the present invention includes an outer knife which is moved radially inward and actively revolved around the exterior periphery of the pipe. As a result, shorter lengths of pipe can be cut because the pipe is severed before it has completed one revolution.

Briefly stated, the invention is directed to an apparatus for cutting a pipe including an inner knife positioned inside the pipe and an outer knife positioned outside the pipe. The outer knife has a cutting edge adjacent an exterior surface of the pipe and is adapted to revolve in an annular pattern about the axis of the pipe. The outer knife is also adapted to move in a generally radial direction between a standby position spaced apart from the pipe and a cutting position in which the outer knife is in overlapping relationship with the inner knife. In addition, a fluid operated cylinder assembly is provided to move the outer knife between the standby and cutting positions. Thus, the cutting edge of the outer knife contacts the entire circumference of the pipe during a cutting operation. The cylinder assembly revolves about the axis of the pipe simultaneously with the outer knife.

In a preferred embodiment, the cylinder assembly and the outer knife are mounted to a cutting head. The cutting head is rotatably mounted to a housing and has an orifice in fluid flow communication with the cylinder assembly. Preferably, the orifice has a first portion extending substantially parallel to the axis of the cutting head and a second portion extending in a radial direction. The second portion terminates into an annular groove formed in the housing so that the orifice is always in fluid flow communication with the groove regardless of the angular position of the cutting head. Thus, the cylinder assembly can be actuated to move the outer knife between the standby and cutting positions while both the cylinder assembly and outer knife revolve around the pipe. Preferably, the cylinder assembly comprises a pneumatic cylinder and piston, and a pair of annular seals are positioned adjacent each side of the groove to inhibit the flow of air between the housing and cutting head.

In addition, the outer knife preferably has a circular cutting edge and is rotatably attached to a pivot arm. The pivot arm has a first end pivotally attached to the cutting head and a second end in operable engagement with the cylinder assembly. The location of the first end of the pivot arm is also adjustable to vary the cutting position of the outer knife and allow the cutting of pipes having different diameters.

Also in a preferred embodiment, the cutting apparatus is configured to cut continuously formed spiral pipe which moves in an axial direction and rotates while it is being cut. An axial motion mechanism is provided to move the inner knife, cutting head and housing in the axial direction of the pipe at substantially the same speed as the pipe during the cutting operation. The axial motion mechanism also retracts the inner knife, cutting head, and housing in the opposite direction after the outer knife has made a complete revolution around the circumference of the pipe.

The present invention provides advantages over other pipe cutting machines. Since the outer knife is actively revolved around the exterior periphery of the pipe, the pipe is severed before it has completed one revolution. Thus, shorter lengths of pipe can be cut at a faster rate.
Furthermore, since a fluid-operated cylinder, preferably a pneumatic cylinder, is used to move the outer knife between the standby and cutting positions, a more consistent force can be applied to perform the cut. Moreover, the location of the cylinder assembly and the outer knife outside the pipe facilitates maintenance and allows easy access for adjustments in order to cut different size pipes.

The present invention, together with further objects and advantages, will be best understood by reference to the following detailed description taken in conjunction with the accompanying drawings.
FIGURE 1 is a perspective view of a preferred embodiment of the present invention with various components removed for clarity;
FIGURE 2 is a side view thereof;
FIGURE 2A is a front view of a fiber optic assembly and guide assembly;
FIGURE 3 is a front view of the preferred embodiment of the present invention with various components removed for clarity;
FIGURE 4 is a top view thereof showing the inner knife and various other components in section;
FIGURE 4A is a cross-sectional view taken along the line 4A-4A in Figure 4 and showing a linear spline bearing assembly interconnecting a shaft and a mandrel;
FIGURE 5 is an enlarged side view of a cutter assembly showing an inner knife and various other components in cross-section;

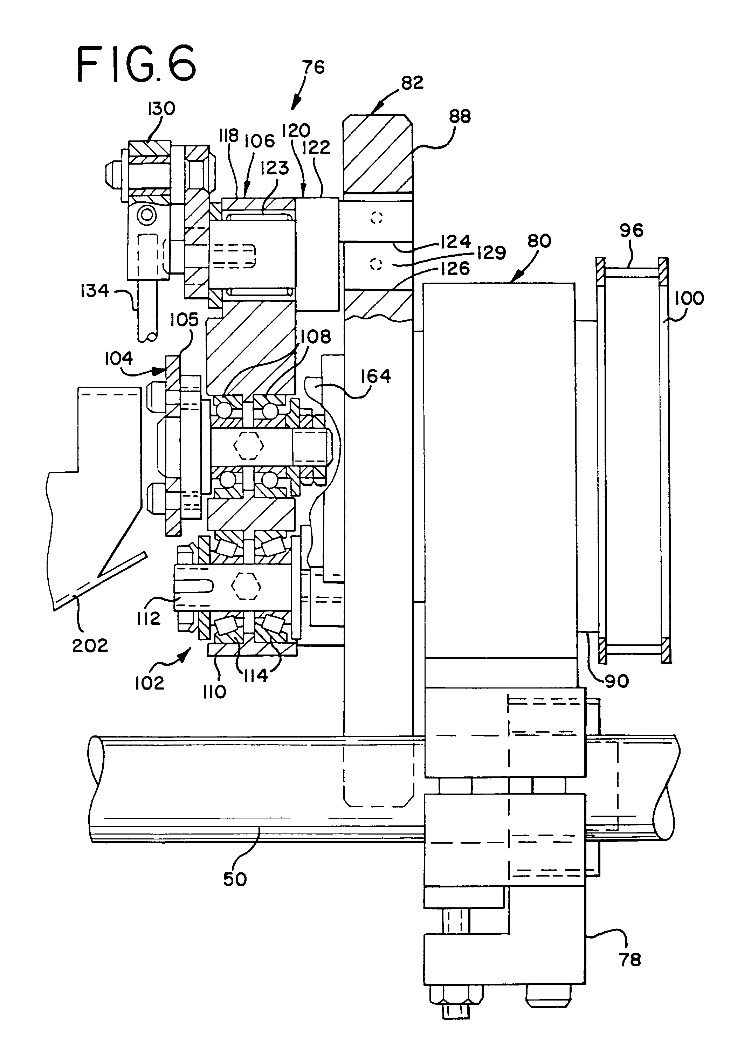

FIGURE 6 is an enlarged side view of the cutter assembly showing an outer knife and pivot arm in cross-section;
FIGURE 7 is an enlarged top view of the cutter assembly showing various components in cross-section;

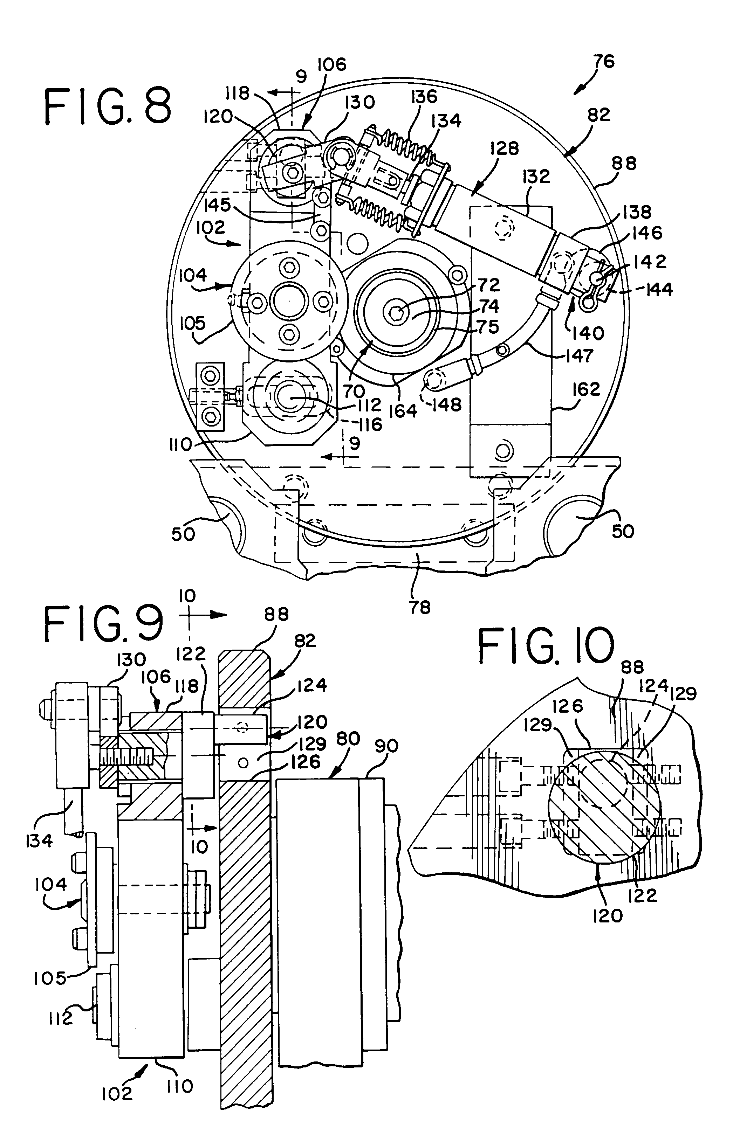

FIGURE 8 is a front view of the cutter assembly showing a cylinder assembly in a retracted position and the outer knife in a standby position;
FIGURE 9 is a cross-sectional view taken along the line 9-9 in Figure 8 and showing the eccentric shaft connection between the pivot arm and the cutter head;
FIGURE 10 is a cross-sectional view of the eccentric shaft connection taken along the line 10-10 in Figure 9;
FIGURE 11 is a front view of the cutter assembly showing the cylinder assembly in an extended position and the outer knife in a cutting position overlapping the inner knife;
FIGURE 12 is a cross-sectional view taken along the line 12-12 in Figure 11 and showing the eccentric shaft connection between the pivot arm and the cutter head;
FIGURE 13 is a cross-sectional view of the eccentric shaft connection taken along the line 13-13 in Figure 12.

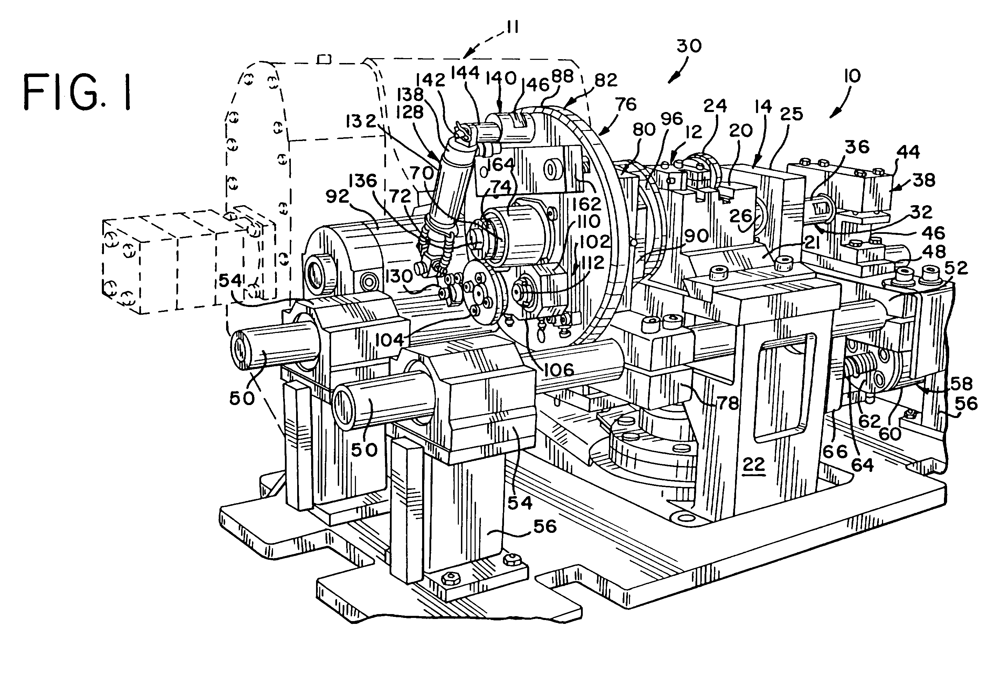

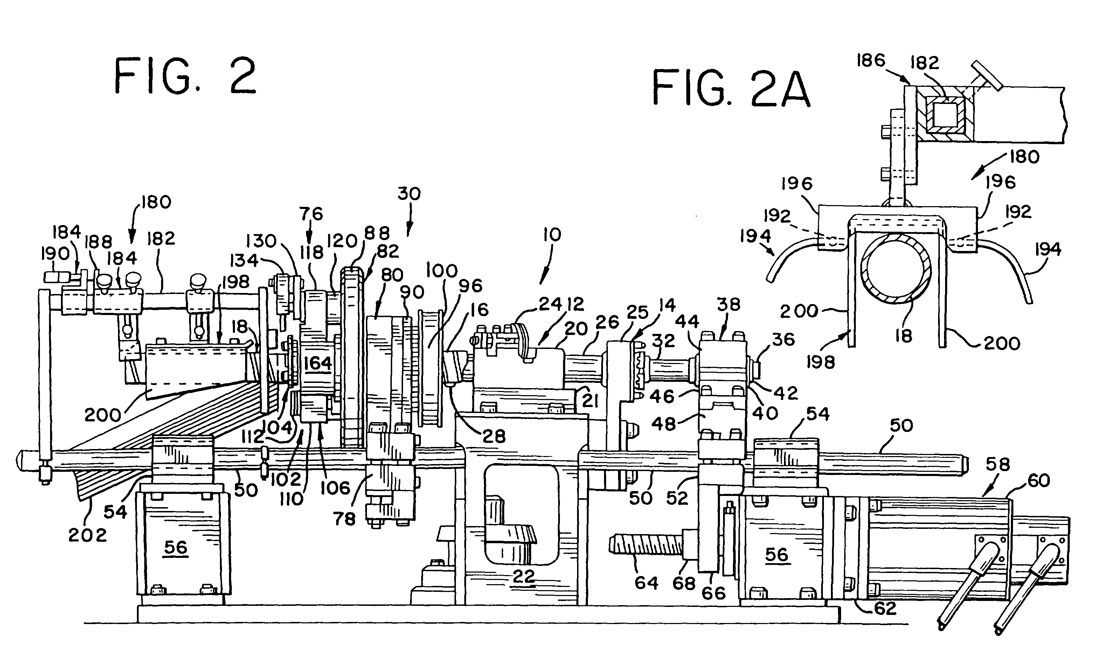

Referring to the drawings, Figures 1 and 2 show a pipe forming apparatus indicated generally at 10 in combination with a pipe cutting apparatus indicated generally at 30. The pipe forming apparatus 10 is described in greater detail in my U.S. Patent No. 5,105,639, issued April 21, 1992, the disclosure of which is specifically incorporated herein by reference.

The pipe forming apparatus 10 includes a strip forming machine 11, a forming head assembly 12, and a mandrel assembly 14. The forming head assembly 12 and mandrel assembly 14 cooperate to form a metal strip into a spiral pipe 18. The forming head assembly 12 includes a forming head 20 and a base 21 which is detachably secured to a forming head table 22.

A folding roller (not shown) is located in the base 21 of the forming head assembly 12, and a lockseam closing roller 24 is positioned on top of the forming head 20. The mandrel assembly 14 includes a vertical holder assembly 25 and a cylindrical mandrel 26. The mandrel 26 is positioned inside the forming head 20 and the vertical holder assembly 25 allows the mandrel 26 to be passively rotatable about its centerline and pivotal in any radial direction.

In the forming operation, the strip forming machine 11 feeds the metal strip into the forming head assembly 12. The strip is driven around the rotatable mandrel 26 and inside the forming head 20 in a helical manner, so that outer edges of the strip are positioned adjacent each other in helical fashion. The folding roller (not shown) folds the adjacent, mated edges of the helically wound strip. To form a tight, helical lockseam 28, the lockseam roller 24 compresses the folded strip edges against the mandrel 26. The strip edges are folded and compressed into three layers to create a lockseam 28 having a thickness which is four times greater than the thickness of the metal strip. As the spiral pipe production continues, the pipe 18 moves out of the forming head 20 in a helical fashion, i.e. the pipe 18 moves in an axial direction while it rotates. Although the present cutting apparatus will be described in conjunction with the foregoing forming apparatus, it can be used with any pipeforming apparatus.

The preferred embodiment of the present pipe cutting apparatus 30 includes many elements of the cutting machines disclosed in my U.S. Patent Nos. 4,924,684, 5,193,374, and 5,257,521 issued May 15, 1990, March 16, 1993, and November 2, 1993. The description of the cutting machines in those documents are specifically incorporated herein by reference and made a part hereof.

A shaft 32 is positioned inside the mandrel 26 and has a forward end 34 extending forwardly of the forming head assembly 12 and an aft end 36 supported by a shaft holder assembly 38. Preferably, the shaft 32 is rotatably mounted to the shaft holder assembly 38, although it can be fixedly mounted thereto. A lock washer 40 and lock nut 42 are attached to the end 36 to prevent any axial movement of shaft 32 relative to the shaft holder assembly 38. The shaft holder assembly 38 has an upper section 44 clamped to a lower section 46 which is mounted on an attachment block 48. The attachment block 48 passes between guide bars 50 and is secured to a guide bar connector 52 so that the bar connector 52, attachment block 48, and shaft holder assembly 38 move axially with the guide bars 50. The guide bars 50 pass through openings in the forming head table 22, and slide through bearing housings 54, which include THK Slide Bearing SC 25 Assemblies. There are four such bearing housings 54, each of which is attached to the top of a mounting leg 56.

To move the guide bars 50 and all their connected components in the axial direction of the pipe 18 during the cutting operation, a servo motor assembly 58 is provided. As best shown in Figure 2, this assembly 58 includes a servo motor 60, a base 62, and a ball screw 64. The base 62 is attached to the mounting legs 56 and the ball screw 64 is secured to a piece of flat stock 66 by a ball nut 68. The flat stock 66 is attached to the central portion of the attachment block 48. During the cutting operation, the motor 60 rotates the ball screw 64 in one direction, and the ball screw cooperates with the ball nut 68 to push the flat stock 66, the attachment block 48, the guide bars 50, and all their connected components, including inner and outer knives, in the axial direction of the pipe 18.

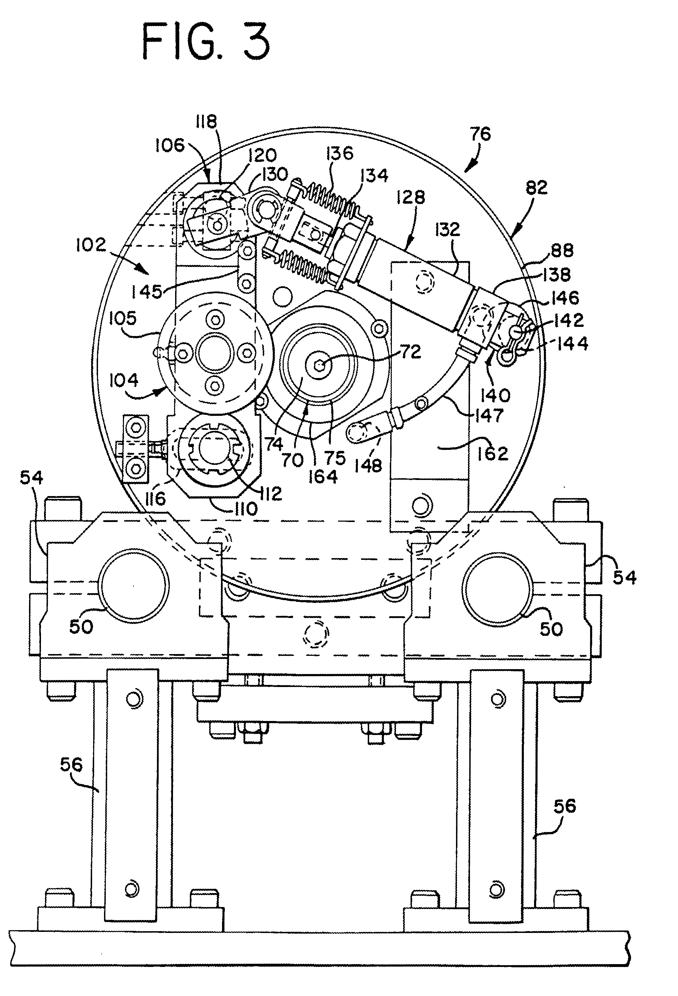

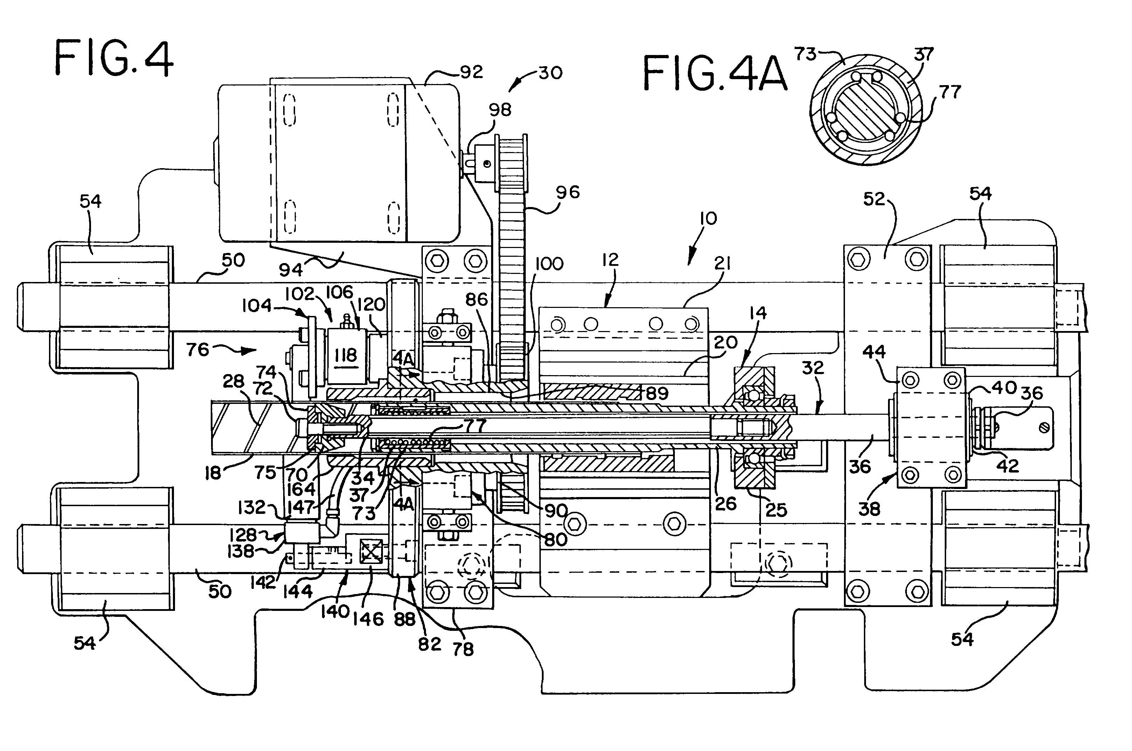

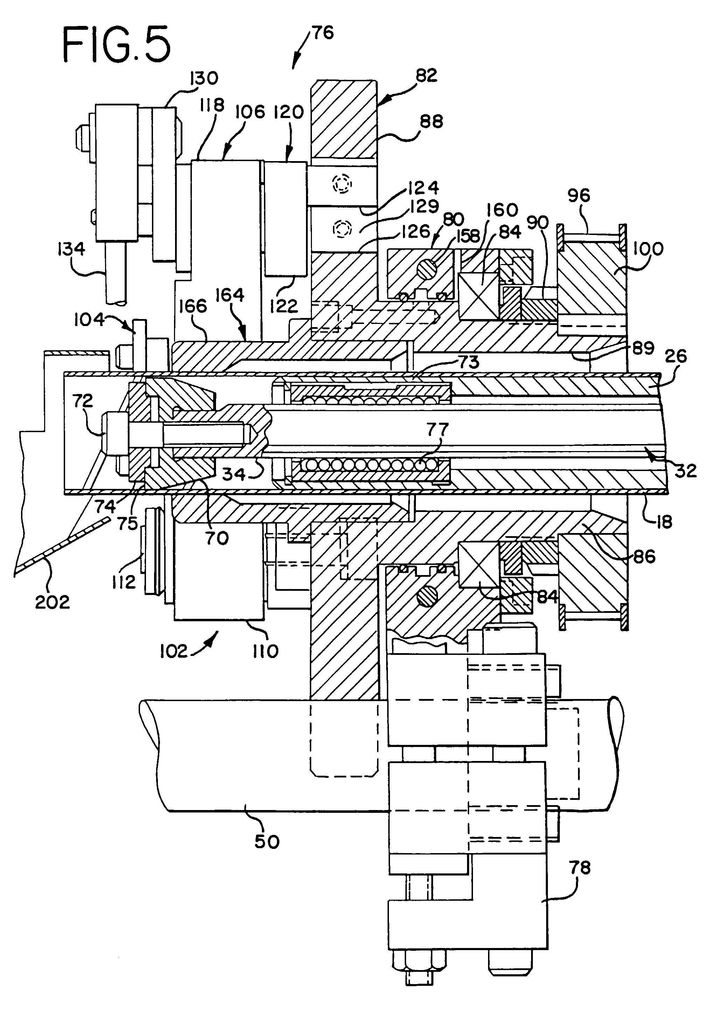

As best shown in Figures 3-5, an inner knife 70 is mounted to the forward end 34 of the shaft 32 by a bolt 72, and a washer 74 is positioned between the bolt 72 and the inner knife 70. The inner knife 70 preferably has a circular cutting edge 75 which is slightly smaller in diameter than the inner diameter of the pipe 18 to provide a cutting edge adjacent the entire interior periphery of the pipe 18. In addition, the forward end 34 of the shaft 32 is configured with a plurality of splines or keys as shown in Figures 4A and 5. The forward end 34 of the shaft 32 mates with a similarly configured female end portion 73 of the mandrel 26. Thus, the shaft 32, inner knife 70, and mandrel 26 are passively rotated as a unit during the formation of the pipe 18 in the forming head assembly 12. Since formation of the pipe 18 is normally a continuous operation, the shaft 32, inner knife 70, and mandrel 26 continually rotate in response to forces exerted on the mandrel 26 by the metal strip. In some prior art machines, a cylindrical bushing is used to allow the shaft to move axially relative to the mandrel. In such a configuration, the shaft and inner knife are passively rotatable independently of the mandrel in response to forces exerted by the outer knife. Thus, the shaft tends to rotate in the opposite direction of the mandrel, which can cause the mandrel to bind and inhibit proper formation of the spiral pipe. In addition, the bushing tends to wear out, which leads to a loose or sloppy inner knife. The present invention overcomes these disadvantages by providing a splined shaft and mandrel which rotate as a unit rather than independently. Preferably, a linear spline bearing assembly 77 such as a THK Ball Spline Type LBS Assembly interconnects the shaft 32 and the forward end portion 73 of the mandrel 26. The bearing assembly 77 allows the shaft 32 to move axially relative to the mandrel 26. Thus, the mandrel 26 remains in the same axial position while the shaft 32 and inner knife 70 are moved axially by the motor 60 during the cutting operation.

As shown in the drawings, an outer cutter assembly 76 is positioned forwardly of the forming head 12 and is secured to the guide bars 50 by a guide bar connector 78. The outer cutter assembly 76 includes a cross roller bearing housing 80 which is attached to the guide bar connector 78 by conventional fasteners. Preferably, the bar connector 78 has a pair of elongated slots therein (not shown) to allow vertical adjustment of the cross roller bearing housing 80. A cutting head 82 is positioned within the cross roller bearing housing 80 and rotatably held therein by a cross roller bearing 84. Preferably, the cutting head 82 includes a substantially cylindrical rear hub portion 86 and an enlarged, relatively thin, cylindrical front head portion 88. The cutting head 82 also has a central bore 89 for receiving the pipe 18 therethrough. In addition, a locknut 90 is mounted to a front portion of the housing 80 to retain the cross roller bearing 84 within the housing 80 and restrain axial motion of the cutting head 82. To actively rotate the cutting head 82 at a desired speed, a motor 92 is mounted to a horizontal support plate 94 which is attached to one end of the guide bar connector 78. A belt 96 cooperates with a motor shaft 98 and a pulley 100 which is attached to a rear end of the cutting head hub portion 86.

In order to perform the cutting operation, an outside knife assembly 102 is mounted to the head portion 88 of the cutting head 82 outside the pipe 18. The knife assembly 102 includes an outer knife 104 which is rotatably attached to a pivot arm 106. Preferably, a plurality of angular contact bearings 108 are provided to allow passive rotation of the outer knife 104 as it is revolved around the pipe 18. In addition, the outer knife 104 has a circular cutting edge 105 which is positioned just forwardly of a plane defined by the cutting edge 75 of the inner knife 70. Thus, the inner and outer knives 70 and 104 are in position to overlap when the outer knife 104 is moved radially inward to penetrate the pipe 18. To allow such radial movement, a first end 110 of the pivot arm 106 is rotatably attached to the head portion 88 by a pivot rod 112. Preferably, the pivot rod 112 is surrounded by a plurality of tapered bearings 114. To allow adjustment of the outer knife cutting depth, the pivot rod 112 is secured in a slot 116 formed in the head portion 88 of the cutting head 82. Thus, a different size pipe can be cut by adjusting the pivot rod 112 to a desired location within the slot 116.

To increase the force of the outer knife 104 acting against the pipe 18, a second end 118 of the pivot arm 106 is attached to the head portion 88 by an eccentric shaft 120. The eccentric shaft 120 includes a base portion 122 rotatably mounted to the pivot arm 106 using a plurality of needle bearings 123. A terminal portion 124 of the shaft 120 has an axis which is offset from the axis of the base portion 122. The terminal portion 124 is slidably received by a slot 126 formed in the head portion 88 of the cutting head 82. Preferably, a pair of steel wear plates 129 are attached to the sides of the slot 126 to reduce the amount of wear resulting from the up and down movement of the shaft terminal portion 124. Thus, when the base portion 122 of the shaft 120 is rotated, the eccentric terminal portion 124 moves linearly within the slot 126, thereby causing the pivot arm 106 to move the outer knife 104 radially inward with more force and at a greater rate than would a direct action against the pivot arm 106.

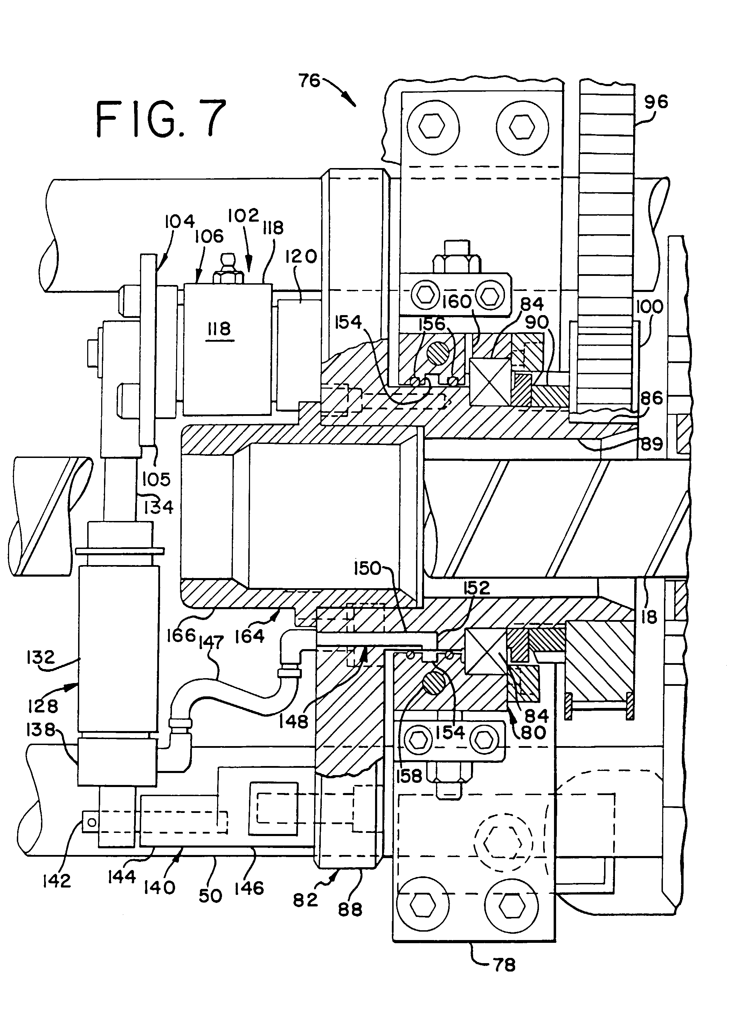

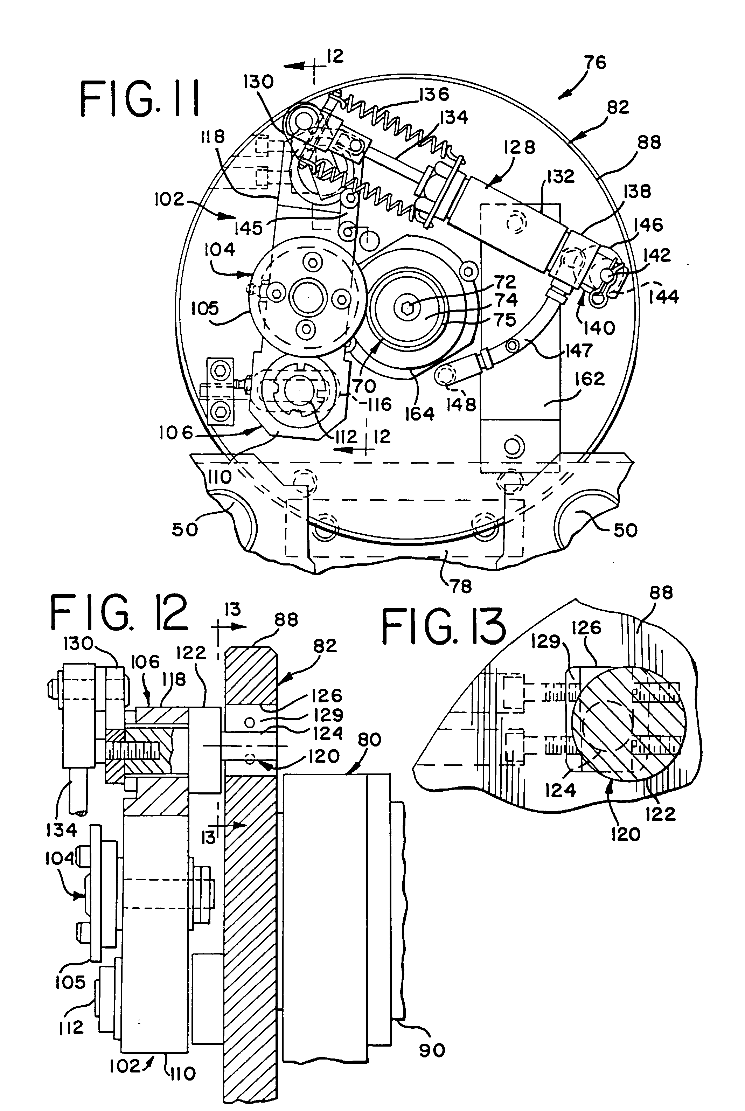

To pivot the arm 106, the base portion 122 of the shaft 120 is rotated by a fluid operated cylinder assembly 128. More particularly, the cylinder assembly 128 operably engages a lever 130 which extends radially outward from the centerline of the shaft base portion 122. Preferably, the cylinder assembly 128 includes a pneumatic cylinder 132 having a piston rod 134 connected to an end of the lever 130. When the piston rod 134 is extended as shown in Figure 11, the angle of the lever 130 is about 90 degrees relative to the piston rod 134 to maximize the force acting on lever 130. A pair of return springs 136 are also provided to assist retraction of the piston rod 134 when the outer knife 104 is to be moved to the standby position. To compensate for the angular displacement of the cylinder 132, a base end 138 is pivotally attached to the head portion 88 of the cutting head 82 by a pivot shaft 140. Preferably, the shaft 140 is eccentric to allow manual adjustment of the cylinder position relative to the lever 130. Thus, the cutting depth of the outer knife 104 can be adjusted by merely rotating the eccentric shaft 140. As best shown in Figure 7, the base end 138 of the cylinder 132 is rotatable about a pin 142 which extends from the centerline of a base portion 144 of the pivot shaft 140. A terminal portion 146 of the shaft 140 is fixedly connected to the head portion 88 of the cutting head 82 and has an axis which is offset from the axis of the base portion 144. Thus, the location of the base end 138 of cylinder 132 can be altered by merely rotating the eccentric shaft 140. In normal operation, the amount of travel of the outer knife 104 between the standby and cutting positions is determined by the stroke of the piston rod 134. However, a stop 145 is provided to prevent undesirable rotation of the lever 130 and shaft 140.

To activate the piston rod 134, air is delivered to the cylinder 132 through a flexible hose 147 which is connected to an orifice 148 formed in the cutting head 82. Preferably, the orifice 148 has a first portion 150 extending substantially parallel to the axis of the cutting head 82. A second portion 152 extends in a radial direction and terminates into an annular groove 154 formed in the cross roller bearing housing 80. Because the groove 154 is annular, the orifice 148 is always in fluid flow communication with the groove 154 regardless of the rotational position of the cutting head 82. Thus, the cylinder 132 can be actuated to extend the piston rod 134 and move the outer knife 104 from the standby to the cutting position while the cutting head 82 is rotating. To inhibit air from leaking out of the groove 154, a pair of O-rings 156 are positioned between the housing 80 and cutting head 82 adjacent each side of the groove 154. A liquid filled annular hole 158 is also formed in the housing 80 to prevent the O-rings from overheating. Moreover, a radial relief hole 160 is formed in the housing 80 so that any air that escapes from the groove 154 does not blow grease out of the cross roller bearing 84.

To act as a counterweight for the outside knife assembly 102 as it revolves in an annular pattern about the axis of the pipe 18, a rectangular block 162 is attached to the head portion 88 of the cutting head 82 opposite the outer knife assembly 102. In addition, a cylindrical sleeve 164 is mounted within the bore 89 of the cutting head 80 for guiding the pipe 18 and offsetting the force of the outer knife 104 during the cutting operation. The sleeve 164 extends forwardly of the cutting head 80 and has an interior chamber for receiving the pipe 18 axially therethrough. A forward portion 166 of the sleeve 164 is positioned adjacent the inner and outer knives 70, 104 and has an inner diameter which is slightly larger than the outer diameter of the pipe 18. Alternatively, the sleeve 164 can extend forwardly beyond the outer knife 104 if a slot is provided therein for accommodating the outer knife 104 during the cutting operation.

When the outer knife 104 contacts the pipe 18 during the cutting operation, the pipe 18 tends to flex in the opposite direction. If an opposing force is not provided, the outer knife 104 could skip over the helical seams 28 in the pipe 18, resulting in an incomplete or sloppy cut. By providing the sleeve 164, a clean cut can be obtained because the opposite side of the pipe 18 is always supported regardless of the location of the outer knife 104 as it revolves around the circumference of the pipe. In past cutting machines, an opposing rollers has been provided to offset the force of the outer knife and center the pipe. Such a roller could be incorporated in the present invention. In particular, the roller could be moved between a standby position spaced apart from the pipe 18 and a support position in contact with the pipe during the cutting operation. Such a roller could be moved by a separate pneumatic cylinder assembly and would act as both a supporting roller as well as a counterweight.

To initiate the cutting operation, a fiber optic assembly 180 is provided (Figs. 2 and 2A). A horizontal bar 182 is adapted to be fixedly mounted to one of the guide bars 50 or a non-rotating component of the cutting apparatus 30. The bar 182 extends forward past a leading edge of the pipe 18, and a calibrator 184 is positioned on an end portion thereof. A vertically adjustable bracket 186 is slidably attached to the bar 182 and includes an upwardly extending flange 188 for engagement with the calibrator 184. To position the bracket 186 at an axial distance away from the inner and outer knives 70 and 104 corresponding to a desired length of pipe to be cut, a knob 190 of the calibrator is turned an appropriate amount. As best shown in Figure 2A, end portions 192 of an optic fiber 194 are attached to spaced apart side members 196 of the bracket 186. The fiber end portions 192 are horizontally aligned so that the encroachment of a leading edge of the pipe 18 therebetween initiates the cutting operation.

In addition, a vertically adjustable pipe guide 198 having downwardly extending vertical flanges 200 is slidably mounted to the bar 182, and a slide 202 is positioned adjacent the cutting apparatus 30 at an angle so that severed sections of pipe 18 fall into the slide 202 and slide downward to a receptacle (not shown). Moreover, the pipe guide 198 and fiber optic assembly bracket 186 can be releasably attached to the bar 182 by conventional fastening means such as set screws, nuts and bolts, or the like.

In operation, the pipe 18 moves forwardly in an axial direction and rotates until a leading edge thereof encroaches the optic line created by the optic fiber end portions 192. As a result, a signal is sent to a motion control unit (not shown) to begin the cutting operation. The motion control unit then sends a signal to the servo motor 60 to begin axial movement of the outer cutter assembly 76 and the inner knife 70 in the axial direction of the pipe 18. To effect such movement, the servo motor 60 rotates the ball screw 64 in one direction to push all of the components connected to the guide bars 50 in the axial direction of the pipe 18. These components initially accelerate until they reach the same speed as the pipe 18, then proceed at the same speed as the pipe. The motion control unit continually monitors the axial speed of the pipe 18 and sends that signal to the servo motor 60.

When the outer cutter assembly 76 and the inner knife 70 have reached the same speed as the pipe 18, the cylinder assembly 128 receives a begin-cut signal from the motion control unit. Air is then sent to the pneumatic cylinder 132 through the groove 154, orifice 148, and hose 147 in order to extend the piston rod 134 out of the cylinder 132. The piston rod 134 pushes the lever 130, which rotates the eccentric shaft 120 and pivots the arm 106 toward the pipe 18, thus causing the outer knife 104 to penetrate the pipe 18 and overlap the inner knife cutting edge 75. Preferably, the cutting head 82 is actively rotated throughout the forming and cutting operation at a constant speed by the motor 92. However, rotation of the cutting head 82 can be delayed until the begin-cut signal is received from the motion control unit.

Thus, as the inner and outer knives 70 and 104 move axially with the pipe 18, the outer knife 104 revolves in an annular pattern outside the pipe 18 and cooperates with the inner knife 70 to cut the pipe. When the outer knife 104 has traveled around the periphery of the pipe 18, the pipe 18 is completely severed and the leading section of pipe 18 falls into the slide 202. It may take more or less than one complete revolution for the outer knife 104 to sever the pipe 18, depending on whether the outer knife 104 is rotating in the same direction of the pipe 18. Alternatively, the cutting operation can proceed after the axial and rotational motion of the pipe 18 has been stopped.

Once the outer knife 104 has completed one revolution, the air supply to the pneumatic cylinder 132 is halted, and the return springs 136 retract the piston rod 134 to its initial position. As a result, the arm 106, with the assistance of the return springs 136, pivots away from the pipe 18 to move the outer knife 104 to the non-cutting standby position. Also, the motion control unit sends an end-cut signal to the drive motor 60 and the cylinder assembly 128. The rotation of the ball screw 64 is reversed, and all the components connected to the guide bars 50, including both knives, pull back to the begin-cut position. When a new section of pipe 18 reaches a desired length and a leading edge encroaches the optic line created by the optic fiber end portions 192, the entire cutting operation is repeated. Thus, a cutting apparatus is provided which can cut relatively short sections of continuously formed pipe.

Although the present invention has been described with reference to preferred embodiments, those skilled in the art will recognize that changes may be made in form and detail without departing from the scope of the invention. As such, it is intended that the foregoing detailed description be regarded as illustrative rather than limiting and that it is the following claims, including all equivalents thereof, which are intended to define the scope of the invention.

## Claims

1. An apparatus for cutting a pipe comprising:
an inner knife (70) positioned inside the pipe (18);
an outer knife (104) positioned outside the pipe (18) and having a cutting edge (105) adjacent an exterior surface of the pipe; characterised in that said outer knife (104) is adapted to revolve in an annular pattern about the axis of the pipe (18) and move in a generally radial direction between a standby position spaced apart from the pipe (18) and a cutting position in which the outer knife (104) is in overlapping relationship with the inner knife (70); the apparatus further comprising a fluid operated cylinder assembly (128) adapted to move the outer knife (104) in said generally radial direction such that the cutting edge (105) of the outer knife (104) contacts the entire circumference of the pipe (18) during a cutting operation, said cylinder assembly (128) being adapted to revolve about the axis of the pipe (18) simultaneously with the outer knife (104).

2. The apparatus of claim 1 wherein the cylinder assembly (128) and outer knife (104) are attached to a rotatable cutting head (82).

3. The apparatus of claim 2 wherein the cutting head (82) is rotatably mounted to a housing (80), said housing having an annular groove (154) in fluid flow communication with the cylinder assembly (128), whereby fluid is deliverable to the cylinder assembly (128) as it revolves about the axis of the pipe (18).

4. The apparatus of claim 3 wherein the cutting head (82) has an orifice (198) formed therein for delivering fluid from the groove (154) to the cylinder assembly (128), said orifice (148) having a first portion (150) extending substantially parallel to the axis of the cutting head (82) and a second portion (152) expending in a radial direction and terminating into the groove (154), whereby the orifice (148) is in fluid flow communication with the cylinder assembly (128) and groove (154) regardless of the rotational position of the cutting head (82).

5. The apparatus of claim 3 further comprising a pair of annular seals (156) positioned adjacent each side of the groove (154) to inhibit the flow of fluid between the housing (80) and cutting head (82).

6. The apparatus of claim 1 further comprising an axial motion mechanism adapted to move the inner knife (70), outer knife (104) and cylinder assembly (128) in the axial direction of the pipe (18) at substantially the same speed as the pipe (18) during the cutting operation, and for retracting said knives (70,104) and cylinder assembly (128) in the opposite direction after the outer knife (104) makes a complete revolution around the circumference of the piper (18).

7. The apparatus of claim 1 wherein the outer knife (104) has a circular cutting edge (105) and is passively rotatable about its centerline.

8. The apparatus of claim 1 wherein the cutting position of the outer knife (104) is adjustable to allow the cutting of pipes having different diameters.

9. The apparatus of claim 1 wherein the inner knife (70) is rotatable.

10. An apparatus for cutting a continuously formed spiral pipe, wherein the pipe (18) moves in an axial direction and rotates while it is being cut, comprising:
an inner knife (70) positioned inside the pipe (18); and
an outer knife (104) positioned outside the pipe (18) and having a cutting edge (105) adjacent an exterior surface of the pipe; characterised by
a rotatable cutting head (82) positioned outside the pipe (18) and adapted to rotate about the axis of the pipe (18);
said outer knife being mounted to the cutting head such that rotation of the cutting head causes the outer knife to revolve in an annular pattern about the axis of the pipe;
the apparatus further comprising a fluid operated cylinder assembly (128) mounted to the cutting head (82) such that rotation of the cutting head (82) causes the cylinder assembly (128) to revolve in an annular pattern about the axis of the pipe (18), said cylinder assembly (128) being adapted to move the outer knife (104) in a generally radial direction between a standby position spaced apart from the pipe (18) and a cutting position in which the outer knife (104) is in an overlapping relationship with the inner knife (70), whereby a cutting edge (105) of the outer knife (104) contacts the entire circumference of the pipe (18) during a cutting operation.

11. The apparatus of claim 10 wherein the cutting head (82) is rotatably mounted to a housing (80), said housing having an annular groove (154) in fluid flow communication with the cylinder assembly (128), whereby fluid is deliverable to the cylinder assembly (128) as it revolves about the axis of the pipe (18).

12. The apparatus of claim 11 wherein the cutting head (82) has a orifice (148) formed therein for delivering fluid from the groove (154) to the cylinder assembly (128), said orifice (148) having a first portion (150) extending substantially parallel to the axis of the cutting head (82) and a second portion (152) extending in a radial direction and terminating into the groove (154), whereby the orifice (148) is in fluid flow communication with the cylinder assembly (128) and groove (154) regardless of the rotational position of the cutting head (82).

13. The apparatus of claim 12 further comprising a pair of annular seals (156) positioned adjacent each side of the groove (154) to inhibit the flow of fluid between the housing (80) and cutting head (82).

14. The apparatus of claim 10 wherein the outer knife (104) is rotatably connected to a pivot arm (106), said pivot arm having a first end pivotally attached to the cutting head (82) and a second end in operable engagement with the cylinder assembly (128).

15. The apparatus of claim 14 wherein the location of the first end of the pivot arm (106) is adjustable to vary the cutting position of the outer knife (104) and allow the cutting of pipes having different diameters.

16. The apparatus of claim 10 further comprising an axial motion mechanism adapted to move the inner knife (70) and cutting head (82) in the axial direction of the pipe (18) at substantially the same speed as the pipe (18) during the cutting operation, and for retracting the inner knife (70) and cutting head (82) in the opposite direction after the outer knife (104) makes a complete revolution around the circumference of the pipe (18).

17. A cutting apparatus for use with a spiral pipe forming apparatus including a mandrel (26) positioned inside a forming head (20), whereby a metal strip enters adjacent one end of the forming head (20), rotates around the mandrel (26), moves in an axial direction, and is formed into a spiral pipe (18), the spiral pipe exiting at the other end of the forming head (20) and continuing to rotate around the mandrel (26) and move in an axial direction away from the forming head (20), the cutting apparatus comprising:
an inner knife (70) positioned inside the pipe (18); and
an outside knife assembly (102) with an outer knife (104) positioned outside the pipe (18) and having a cutting edge (105) adjacent an exterior surface of the pipe ; characterised by
a rotatable cutting head (82) positioned outside the pipe (18) and adapted to rotate about the axis of the pipe (18);
said outside knife assembly (102) including a pivot arm (106) pivotally mounted to the cutting head (82) and said outer knife (104) being rotatably connected to the pivot arm (106), whereby rotation of the cutting head (82) causes the pivot arm (106) and outer knife (104) to revolve in an annular pattern about the axis of the pipe; the apparatus further comprising a fluid operated cylinder assembly (128) having one end pivotally mounted to the cutting head (82) and another end in operable engagement with the pivot arm (106), whereby rotation of the cutting head (82) causes the cylinder assembly (128) to revolve in an annular pattern about the axis of the pipe (18), the cylinder assembly (128) being adapted to move the pivot arm (106) such that the outer knife (104) is moved in a generally radial direction between a standby position spaced apart from the pipe (18) and a cutting position in which the outer knife (104) is in an overlapping relationship with the inner knife (70);
a housing (80) for retaining the rotatable cutting head (82) therein, said housing (80) having an annular groove (154) in fluid flow communication with the cylinder assembly (128), whereby fluid is deliverable to the cylinder assembly (128) as it revolves about the axis of the pipe (18); and
an axial motion mechanism adapted to move the inner knife (70), cutting head (82), and housing (80) in the axial direction of the pipe (18) at substantially the same speed as the pipe (18) during the cutting operation, and for retracting the inner knife (70), cutting head (82), and housing (80) in the opposite direction after the outer knife (104) makes a complete revolution around the circumference of the pipe (18).

18. The apparatus of claim 17 wherein the cutting head (82) has a orifice (148) formed therein for delivering fluid from the groove (154) to the cylinder assembly(128), said orifice (148) having a first portion (150) extending substantially parallel to the axis of the cutting head (82) and a second portion (152) extending in a radial direction and terminating into the groove (154), whereby the orifice (148) is in fluid flow communication with the cylinder assembly (128) and groove (154) regardless of the rotational position of the cutting head (82).

19. The apparatus of claim 17 further comprising a pair of annular seals (156) positioned adjacent each side of the groove (154) to inhibit the flow of fluid between the housing (80) and cutting head (82).

20. An apparatus as claimed in anyone of the preceding claims further comprising a cylindrical sleeve (164) having an interior chamber for receiving the pipe (18) therein, a portion (166) of said sleeve (164) adjacent the inner and outer knives (70,104) having a diameter slightly larger than the pipe (18) to provide guidance for the pipe (18) and offset the force of the outer knife (104) during a cutting operation.

## Patentansprüche

1. Vorrichtung zum Schneiden eines Rohrs, die umfaßt:
ein inneres Messer (70), das im Inneren des Rohrs (18) angeordnet ist;
ein äußeres Messer (104), das außerhalb des Rohrs (18) angeordnet ist und eine Schneide (105) an eine Außenfläche des Rohrs angrenzend aufweist; **dadurch gekennzeichnet,** daß das äußere Messer (104) sich in einem ringförmigen Muster um die Achse des Rohrs (18) herum dreht und sich in einer im allgemeinen radialen Richtung zwischen einer Bereitschaftsposition, die von dem Rohr (18) beabstandet ist, und einer Schneidposition bewegt, in der das äußere Messer (104) in überdeckender Beziehung zu dem inneren Messer (70) steht; wobei die Vorrichtung des weiteren eine fluidbetriebene Zylinderbaugruppe (128) umfaßt, die das äußere Messer (104) in der im allgemeinen radialen Richtung so bewegt, daß die Schneide (105) des äußeren Messers (104) während eines Schneidvorgangs mit dem gesamten Umfang des Rohrs (18) in Kontakt kommt, und sich die Zylinderbaugruppe (128) gleichzeitig mit dem äußeren Messer (104) um die Achse des Rohrs (18) herum dreht.

2. Vorrichtung nach Anspruch 1, wobei die Zylinderbaugruppe (128) und das äußere Messer (104) an einem drehbaren Schneidkopf (82) angebracht sind.

3. Vorrichtung nach Anspruch 2, wobei der Schneidkopf (82) drehbar an einem Gehäuse (80) angebracht ist und das Gehäuse eine Ringnut (154) aufweist, die in Fluidverbindung mit der Zylinderbaugruppe (128) steht, so daß der Zylinderbaugruppe (128) Fluid zugeführt werden kann, wenn sie sich um die Achse des Rohrs (18) herum dreht.

4. Vorrichtung nach Anspruch 3, wobei der Schneidkopf (82) eine darin ausgebildete Öffnung (148) zur Zufuhr von Fluid aus der Nut (154) zu der Zylinderbaugruppe (128) aufweist und die Öffnung (148) einen ersten Abschnitt (150) aufweist, der sich im wesentlichen parallel zur Achse des Schneidkopfes (82) erstreckt, sowie einen zweiten Abschnitt (152), der sich in einer radialen Richtung erstreckt und in der Nut (154) endet, so daß die Öffnung (148) unabhängig von der Drehposition des Schneidkopfes (82) in Fluidstromverbindung mit der Zylinderbaugruppe (128) und der Nut (154) steht.

5. Vorrichtung nach Anspruch 3, die des weiteren ein Paar ringförmiger Dichtungen (156) umfaßt, die an jede Seite der Nut (154) angrenzend angeordnet sind und den Strom von Fluid zwischen dem Gehäuse (80) und dem Schneidkopf (82) hemmen.

6. Vorrichtung nach Anspruch 1, die des weiteren einen Axialbewegungsmechanismus umfaßt, der das innere Messer (70), das äußere Messer (104) und die Zylinderbaugruppe (128) während des Schneidvorgangs mit im wesentlichen der gleichen Geschwindigkeit wie das Rohr (18) in der axialen Richtung des Rohrs (18) bewegt, und der die Messer (70, 104) und die Zylinderbaugruppe (128) in der entgegengesetzten Richtung zurückzieht, nachdem das äußere Messer (104) eine vollständige Umdrehung um den Umfang des Rohrs (18) herum ausgeführt hat.

7. Vorrichtung nach Anspruch 1, wobei das äußere Messer (104) eine kreisförmige Schneide (105) hat und passiv um seine Mittellinie herum gedreht werden kann.

8. Vorrichtung nach Anspruch 1, wobei die Schneidposition des äußeren Messers (104) verstellt werden kann, so daß Rohre mit unterschiedlichem Durchmesser geschnitten werden können.

9. Vorrichtung nach Anspruch 1, wobei das innere Messer (70) gedreht werden kann.

10. Vorrichtung zum Schneiden eines kontinuierlich ausgebildeten spiralförmigen Rohrs, wobei sich das Rohr (18), während es geschnitten wird, in einer axialen Richtung bewegt und sich dreht, die umfaßt:
ein inneres Messer (70), das im Inneren des Rohrs (18) angeordnet ist; und
ein äußeres Messer (104), das außerhalb des Rohrs (18) angeordnet ist und eine Schneide (105) an eine Außenfläche des Rohrs angrenzend aufweist;
**gekennzeichnet durch:**
einen drehbaren Schneidkopf (82), der außerhalb des Rohrs (18) angeordnet ist und sich um die Achse des Rohrs (18) dreht;
wobei das äußere Messer so an dem Schneidkopf angebracht ist, daß die Drehung des Schneidkopfes bewirkt, daß sich das äußere Messer in einem ringförmigen Muster um die Achse des Rohrs herum dreht;
wobei die Vorrichtung des weiteren umfaßt:
eine fluidbetriebene Zylinderbaugruppe (128), die an dem Schneidkopf (82) so angebracht ist, daß Drehung des Schneidkopfes (82) bewirkt, daß sich die Zylinderbaugruppe (128) in einem kreisförmigen Muster um die Achse des Rohrs (18) herum dreht, wobei die Zylinderbaugruppe (128) das äußere Messer (104) in einer im allgemeinen radialen Richtung zwischen einer Bereitschaftsposition, die von dem Rohr (18) beabstandet ist, und einer Schneidposition bewegt, in der das äußere Messer (104) in einer überdeckenden Beziehung zu dem inneren Messer (70) steht, so daß eine Schneide (105) des äußeren Messers (104) während eines Schneidvorgangs mit dem gesamten Umfang des Rohrs (18) in Kontakt kommt.

11. Vorrichtung nach Anspruch 10, wobei der Schneidkopf (82) drehbar an einem Gehäuse (80) angebracht ist und das Gehäuse eine Ringnut (154) aufweist, die in Fluidstromverbindung mit der Zylinderbaugruppe (128) steht, so daß der Zylinderbaugruppe (128) Fluid zugeführt werden kann, wenn sie sich um die Achse des Rohrs (18) herum dreht.

12. Vorrichtung nach Anspruch 11, wobei der Schneidkopf (82) eine darin ausgebildete Öffnung (148) zur Zufuhr von Fluid aus der Nut (154) zu der Zylinderbaugruppe (128) aufweist und die Öffnung (148) einen ersten Abschnitt (150) aufweist, der sich im wesentlichen parallel zu der Achse des Schneidkopfes (82) erstreckt, sowie einen zweiten Abschnitt (250), der sich in einer radialen Richtung erstreckt und in der Nut (154) endet, so daß die Öffnung (148) unabhängig von der Drehposition des Schneidkopfes (82) in Fluidstromverbindung mit der Zylinderbaugruppe (128) und der Nut (154) steht.

13. Vorrichtung nach Anspruch 12, die des weiteren ein Paar ringförmiger Dichtungen (156) aufweist, die an jede Seite der Nut (154) angrenzend angeordnet sind und den Strom von Fluid zwischen dem Gehäuse (80) und dem Schneidkopf (82) hemmen.

14. Vorrichtung nach Anspruch 10, wobei das äußere Messer (104) drehbar mit einem Schwenkarm (106) verbunden ist und der Schwenkarm ein erstes Ende aufweist, das schwenkbar an dem Schneidkopf (82) angebracht ist, sowie ein zweites Ende, das in Betätigungseingriff mit der Zylinderbaugruppe (128) ist.

15. Vorrichtung nach Anspruch 14, wobei die Position des ersten Endes des Schwenkarms (106) verstellt werden kann, um die Schneidposition des äußeren Messers (104) zu verändern und Rohre mit unterschiedlichem Durchmesser schneiden zu können.

16. Vorrichtung nach Anspruch 10, die des weiteren einen Axialbewegungsmechanismus umfaßt, der das innere Messer (70) und den Schneidkopf (82) während des Schneidvorgangs mit im wesentlichen der gleichen Geschwindigkeit wie das Rohr (18) in der axialen Richtung des Rohrs (18) bewegt, und der das innere Messer (70) und den Schneidkopf (82) in der entgegengesetzten Richtung zurückzieht, nachdem das äußere Messer (104) eine vollständige Umdrehung um den Umfang des Rohrs (18) herum ausgeführt hat.

17. Schneidvorrichtung zum Einsatz bei einer Spiralrohr-Herstellungsvorrichtung, die einen Dorn (26) enthält, der im Inneren eines Formkopfes (20) angeordnet ist, so daß ein Metallband an ein Ende des Formkopfes (20) angrenzend eintritt, sich um den Dorn (26) herum dreht, sich in einer axialen Richtung bewegt und zu einem Spiralrohr (18) geformt wird, wobei das Spiralrohr am anderen Ende des Formkopfes (20) austritt und sich weiter um den Dorn (26) herum dreht und sich in einer axialen Richtung von dem Formkopf (20) weg bewegt, wobei die Schneidvorrichtung umfaßt:
ein inneres Messer (70), das im Inneren des Rohrs (18) angeordnet ist; und
eine äußere Messerbaugruppe (102) mit einem äußeren Messer (104), das außerhalb des Rohrs (18) angeordnet ist und eine Schneide (105) an eine Außenfläche des Rohrs angrenzend aufweist; **gekennzeichnet durch:**
einen drehbaren Schneidkopf (82), der außerhalb des Rohrs (18) angeordnet ist und sich um die Achse des Rohrs (18) herum dreht;
wobei die äußere Messerbaugruppe (102) einen Schwenkarm (106) enthält, der schwenkbar an dem Schneidkopf (82) angebracht ist, und das äußere Messer (104) drehbar mit dem Schwenkarm (106) verbunden ist, so daß Drehung des Schneidkopfes (82) bewirkt, daß sich der Schwenkarm (106) und das äußere Messer (104) in einem ringförmigen Muster um die Achse des Rohrs herum drehen; wobei die Vorrichtung des weiteren umfaßt:
eine fluidbetriebene Zylinderbaugruppe (128), die ein Ende aufweist, das schwenkbar an dem Schneidkopf (82) angebracht ist, und ein anderes Ende, das in Betätigungseingriff mit dem Schwenkarm (106) ist, so daß Drehung des Schneidkopfes (82) bewirkt, daß sich die Zylinderbaugruppe (128) in einem ringförmigen Muster um die Achse des Rohrs (18) herum dreht, wobei die Zylinderbaugruppe (128) den Schwenkarm (106) so bewegt, daß das äußere Messer (104) in einer im allgemeinen radialen Richtung zwischen einer Bereitschaftsposition, die von dem Rohr (18) beabstandet ist, und einer Schneidposition bewegt wird, in der das äußere Messer (104) in einer überdeckenden Beziehung zu dem inneren Messer (70) steht;
ein Gehäuse (80), das den drehbaren Schneidkopf (82) darin hält, wobei das Gehäuse (80) eine Ringnut (154) aufweist, die in Fluidstromverbindung mit der Zylinderbaugruppe (128) steht, so daß das Fluid der Zylinderbaugruppe (128) zugeführt werden kann, wenn sie sich um die Achse des Rohrs (18) herum dreht; und
einen Axialbewegungsmechanismus, der das innere Messer (70), den Schneidkopf (82) und das Gehäuse (80) während des Schneidvorgangs mit im wesentlichen der gleichen Geschwindigkeit wie das Rohr (18) in der axialen Richtung des Rohrs (18) bewegt, und der das innere Messer (70), den Schneidkopf (182) und das Gehäuse (80) in der entgegengesetzten Richtung zurückzieht, nachdem das äußere Messer (104) eine vollständige Umdrehung um den Umfang des Rohrs (18) herum ausgeführt hat.

18. Vorrichtung nach Anspruch 17, wobei der Schneidkopf (82) eine darin ausgebildete Öffnung (148) zur Zufuhr von Fluid aus der Nut (154) zu der Zylinderbaugruppe (128) aufweist und die Öffnung (148) einen ersten Abschnitt (150) aufweist, der sich im wesentlichen parallel zu der Achse des Schneidkopfes (82) erstreckt, sowie einen zweiten Abschnitt (152), der sich in einer radialen Richtung erstreckt und in der Nut (154) endet, so daß die Öffnung unabhängig von der Drehposition des Schneidkopfes (82) in Fluidstromverbindung mit der Zylinderbaugruppe (128) und der Nut (154) steht.

19. Vorrichtung nach Anspruch 17, die des weiteren ein Paar ringförmiger Dichtungen (156) umfaßt, die an jede Seite der Nut (154) angrenzend angeordnet sind, und den Strom von Fluid zwischen dem Gehäuse (80) und dem Schneidkopf (82) hemmen.

20. Vorrichtung nach einem der vorangehenden Ansprüche, die des weiteren eine zylindrische Hülse (164) mit einer Innenkammer zur Aufnahme des Rohrs (18) darin umfaßt, wobei ein Abschnitt (166) der Hülse (164) an das innere und das äußere Messer (70, 104) angrenzend einen Durchmesser hat, der etwas größer ist als der des Rohrs (18), um das Rohr (18) zu führen, und die Kraft des äußeren Messers (104) während eines Schneidvorgangs auszugleichen.

## Revendications

1. Appareil pour la découpe d'un tube comportant : un couteau intérieur (70) positionné à l'intérieur du tube (18);
un couteau extérieur (104) positionné à l'extérieur du tube (18) et ayant un bord de coupe (105) adjacent à une surface extérieure du tube, caractérisé en ce que ledit couteau extérieur (104) est prévu pour tourner suivant un modèle annulaire autour de l'axe du tube (18) et se déplacer dans une direction globalement radiale entre une position d'attente espacée du tube (18) et une position de coupe dans laquelle le couteau extérieur (104) est en relation de chevauchement avec le couteau intérieur (70); l'appareil comportant en outre un ensemble de cylindre actionné par fluide (128) prévu pour déplacer le couteau extérieur (104) dans ladite direction globalement radiale de telle sorte que le bord de coupe (105) du couteau extérieur (104) vient en contact avec la circonférence complète du tube (18) pendant une opération de coupe, ledit ensemble de cylindre (128) étant prévu pour tourner autour de l'axe du tube (18) simultanément avec le couteau extérieur (104).

2. Appareil selon la revendication 1, dans lequel l'ensemble de cylindre (128) et le couteau extérieur (104) sont fixés sur une tête de coupe rotative (82).

3. Appareil selon la revendication 2, dans lequel la tête de coupe (82) est montée de façon rotative sur un carter (80), ledit carter ayant une rainure annulaire (154) en communication d'écoulement de fluide avec l'ensemble de cylindre (128), de sorte que du fluide peut être délivré à l'ensemble de cylindre (128) lorsqu'il tourne autour de l'axe du tube (18).

4. Appareil selon la revendication 3, dans lequel la tête de coupe (82) possède un orifice (148) formé dedans afin de délivrer du fluide de la rainure (154) vers l'ensemble de cylindre (128), ledit orifice (148) ayant une première partie (150) s'étendant sensiblement parallèlement à l'axe de la tête de coupe (82) et une deuxième partie (152) s'étendant dans une direction radiale et se terminant dans la rainure (154), de sorte que l'orifice (148) est en communication d'écoulement de fluide avec l'ensemble de cylindre (128) et la rainure (154) indépendamment de la position de rotation de la tête de coupe (82).

5. Appareil selon la revendication 3, comportant en outre une paire de joints annulaires (156) positionnés de façon adjacente à chaque côté de la rainure (154) afin d'empêcher l'écoulement de fluide entre le carter (80) et la tête de coupe (82).

6. Appareil selon la revendication 1, comportant en outre un mécanisme de déplacement axial prévu pour déplacer le couteau intérieur (70), le couteau extérieur (104) et l'ensemble de cylindre (128) dans la direction axiale du tube (18) sensiblement à la même vitesse que le tube (18) pendant l'opération de coupe, et destiné à rétracter lesdits couteaux (70, 104) et l'ensemble de cylindre (128) dans la direction opposée une fois que le couteau extérieur (104) réalise une rotation complète autour de la circonférence du tube (18).

7. Appareil selon la revendication 1, dans lequel le couteau extérieur (104) possède un bord de coupe circulaire (105) et peut tourner de manière passive autour de son axe.

8. Appareil selon la revendication 1, dans lequel la position de coupe du couteau extérieur (104) peut être ajustée afin de permettre la coupe de tuyaux ayant différents diamètres.

9. Appareil selon la revendication 1, dans lequel le couteau intérieur (70) est rotatif.

10. Appareil destiné à découper un tube en spirale formé de manière continue, dans lequel le tube (18) se déplace dans une direction axiale et tourne alors qu'il est découpé, comportant :
un couteau intérieur (70) positionné à l'intérieur du tube (18); et
un couteau extérieur (104) positionné à l'extérieur du tube (18) et ayant un bord de coupe (105) adjacent à une surface extérieure du tube; caractérisé par
une tête de coupe rotative (82) positionnée à l'extérieur du tube (18) et prévue pour tourner autour de l'axe du tube (18);
ledit couteau extérieur étant monté sur la tête de coupe de telle sorte que la rotation de la tête de coupe amène le couteau extérieur à tourner suivant un modèle annulaire autour de l'axe du tube;
l'appareil comportant en outre un ensemble de cylindre actionné par fluide (128) monté sur la tête de coupe (82) de telle sorte que la rotation de la tête de coupe (82) amène l'ensemble de cylindre (128) à tourner suivant un modèle annulaire autour de l'axe du tube (18), ledit ensemble de cylindre (128) étant prévu pour déplacer le couteau extérieur (104) dans une direction globalement radiale entre une position d'attente espacée du tube (18) et une position de coupe dans laquelle le couteau extérieur (104) est en relation de chevauchement avec le couteau intérieur (70), de sorte qu'un bord de coupe (105) du couteau extérieur (104) est en contact avec toute la circonférence du tube (18) pendant une opération de coupe.

11. Appareil selon la revendication 10, dans lequel la tête de coupe (82) est montée de façon rotative sur un carter (80), ledit carter ayant une rainure annulaire (154) en communication d'écoulement de fluide avec l'ensemble de cylindre (128), de sorte que du fluide peut être délivré à l'ensemble de cylindre (128) lorsqu'il tourne autour de l'axe du tube (18).

12. Appareil selon la revendication 11, dans lequel la tête de coupe (82) possède un orifice (148) formé dedans afin de délivrer du fluide de la rainure (154) vers l'ensemble de cylindre (128), ledit orifice (148) ayant une première partie (150) s'étendant sensiblement parallèlement à l'axe de la tête de coupe (82) et une deuxième partie (152) s'étendant dans une direction radiale et se terminant dans la rainure (154), de sorte que l'orifice (148) est en communication d'écoulement de fluide avec l'ensemble de cylindre (128) et la rainure (154) indépendamment de la position de rotation de la tête de coupe (82).

13. Appareil selon la revendication 12, comportant en outre une paire de joints annulaires (156) positionnés de façon adjacente à chaque côté de la rainure (154) afin d'empêcher l'écoulement de fluide entre le carter (80) et la tête de coupe (82).

14. Appareil selon la revendication 10, dans lequel le couteau extérieur (104) est relié de façon rotative à un bras de pivot (106), ledit bras de pivot ayant une première extrémité fixée de façon pivotante sur la tête de coupe (82) et une deuxième extrémité en engagement opérationnel avec l'ensemble de cylindre (128).

15. Appareil selon la revendication 14, dans lequel l'emplacement de la première extrémité du bras de pivot (106) est réglable afin de modifier la position de coupe du couteau extérieur (104) et permettre la coupe de tubes ayant différents diamètres.

16. Appareil selon la revendication 10, comportant en outre un mécanisme de déplacement axial prévu pour déplacer le couteau intérieur (70) et la tête de coupe (82) dans la direction axiale du tube (18) sensiblement à la même vitesse que le tube (18) pendant l'opération de coupe, et destiné à rétracter le couteau intérieur (70) et la tête de coupe (82) dans la direction opposée une fois que le couteau extérieur (104) réalise une rotation complète autour de la circonférence du tube (18).

17. Appareil de coupe pour utilisation avec un appareil de formation de tube en spirale comprenant un mandrin (26) positionné à l'intérieur d'une tête de formage (20), de sorte qu'une bande métallique entre de façon adjacente à une extrémité de la tête de formage (20), tourne autour du mandrin (26), se déplace dans une direction axiale, et est formée en un tube en spirale (18), le tube en spirale sortant à l'autre extrémité de la tête de formage (20) et continuant à tourner autour du mandrin (26) et à se déplacer dans une direction axiale à l'écart de la tête de formage (20), l'appareil de coupe comportant :
un couteau intérieur (70) positionné à l'intérieur du tube (18); et
un ensemble de couteau extérieur (102) avec un couteau extérieur (104) positionné à l'extérieur du tube (18) et ayant un bord de coupe (105) adjacent à une surface extérieure du tube; caractérisé par
une tête de coupe rotative (82) positionnée à l'extérieur du tube (18) et prévue pour tourner autour de l'axe du tube (18);
ledit ensemble de couteau extérieur (102) comprenant un bras de pivot (106) monté de façon pivotante sur la tête de coupe (82) et ledit couteau extérieur (104) qui est relié de façon rotative au bras de pivot (106), de sorte que la rotation de la tête de coupe (82) amène le bras de pivot (106) et le couteau extérieur (104) à tourner suivant un modèle annulaire autour de l'axe du tube, l'appareil comportant en outre un ensemble de cylindre actionné par fluide (128) ayant une extrémité montée de façon pivotante sur la tête de coupe (82) et une autre extrémité en engagement opérationnel avec le bras de pivot (106), de sorte que la rotation de la tête de coupe (82) amène l'ensemble de cylindre (128) à tourner suivant un modèle annulaire autour de l'axe du tube (18), l'ensemble de cylindre (128) étant prévu pour déplacer le bras de pivot (106) de telle sorte que le couteau extérieur (104) est déplacé dans une direction globalement radiale entre une position d'attente espacée du tube (18) et une position de coupe dans laquelle le couteau extérieur (104) est en relation de chevauchement avec le couteau intérieur (70);
un carter (80) destiné à retenir la tête de coupe rotative (82) dedans, ledit carter (80) ayant une rainure annulaire (154) en communication d'écoulement de fluide avec l'ensemble de cylindre (128), de sorte que du fluide peut être délivré à l'ensemble de cylindre (128) lorsqu'il tourne autour de l'axe du tube (18); et
un mécanisme de déplacement axial prévu pour déplacer le couteau intérieur (70), la tête de coupe (82), et le carter (80) dans la direction axiale du tube (18) sensiblement à la même vitesse que le tube (18) pendant l'opération de coupe, et destiné à rétracter le couteau intérieur (70), la tête de coupe (82) et le carter (80) dans la direction opposée une fois que le couteau extérieur (104) réalise une rotation complète autour de la circonférence du tube (18).

18. Appareil selon la revendication 17, dans lequel la tête de coupe (82) possède un orifice (148) formé dedans afin de délivrer du fluide de la rainure (154) vers l'ensemble de cylindre (128), ledit orifice (148) ayant une première partie (150) s'étendant sensiblement parallèlement à l'axe de la tête de coupe (82) et une deuxième partie (152) s'étendant dans une direction radiale et se terminant dans la rainure (154), de sorte que l'orifice (148) est en communication d'écoulement de fluide avec l'ensemble de cylindre (128) et la rainure (154) indépendamment de la position de rotation de la tête de coupe (82).

19. Appareil selon la revendication 17, comportant en outre une paire de joints annulaires (156) positionnés de façon adjacente à chaque côté de la rainure (154) afin d'empêcher l'écoulement de fluide entre le carter (80) et la tête de coupe (82).

20. Appareil selon l'une quelconque des revendications précédentes, comportant en outre un manchon cylindrique (164) ayant une chambre intérieure destinée à recevoir le tube (18), une partie (166) dudit manchon (164) adjacente aux couteaux intérieur et extérieur (70, 104) ayant un diamètre légèrement plus grand que le tube (18) afin de permettre un guidage du tube (18) et compenser la force du couteau extérieur (104) pendant une opération de coupe.
